# EUROPÄISCHE PATENTANMELDUNG

(11) **EP 1 719 985 A2**
(43) Veröffentlichungstag der Anmeldung: **08.11.2006**
(21) Anmeldenummer: 06112760.1
(22) Anmeldetag: 19.04.2006
(51) Int. Cl.: G01F 23/36

(54) **Vorrichtung zur Bestimmung eines Füllstandes in einem Behälter**

(30) Priorität: 03.05.2005 DE 102005020596
(71) Anmelder: ROBERT BOSCH GMBH, 70442 Stuttgart (DE)
(72) Erfinder: Posselt, Andreas, 75417, Muehlacker (DE); Windbergs, Thor, 71732, Tamm (DE); Lorenz, Marko, 71723, Grossbottwar (DE); Friedle, Susanne, 74626, Bretzfeld (DE); Gutscher, Andreas, 71706, Markgroeningen (DE)

(57) **Zusammenfassung**

Bekannten Vorrichtungen haben einen in einem Behälter beweglich angeordneten Schwimmer, dessen jeweilige Position mit dem Füllstand korreliert und mittels eines Potentiometers bestimmbar ist. Der Schwimmer ist über einen Schwimmerarm mit dem Potentiometer verbunden. Nachteilig ist, dass das Signal des Potentiometers unmittelbar an eine Füllstandsanzeige geleitet wird, da bei den wenigsten Tankgeometrien ein durchgehend linearer Zusammenhang zwischen der Position des Schwimmers und dem tatsächlichen Füllstand besteht. Der Zusammenhang zwischen der Füllhöhe und dem Füllstand ist bei vielen Tankgeometrien unstetig und/oder zumindest abschnittsweise nichtlinear. Der Schwimmerarm der Vorrichtung ist deshalb für jede Tankbehältervariante derart durch Biegen anzupassen, dass sich eine zufriedenstellende Meßgenauigkeit ergibt. Je komplizierter die Tankgeometrie ist, desto schwieriger ist es, den Schwimmerarm für eine ausreichende Meßgenauigkeit anzupassen. Die Genauigkeit des mit der Vorrichtung gemessenen Füllstands ist dadurch in vielen Fällen vergleichsweise gering.

Bei der erfindungsgemäßen Vorrichtung wird die Meßgenauigkeit erhöht, indem das Signal des Sensorelementes zunächst in einem elektronischen Steuergerät verarbeitet wird.

Erfindungsgemäß ist vorgesehen, dass das Sensorelement (8) mit einem elektronischen Steuergerät (15) verbunden ist, in dem Kenngrößen abgespeichert sind, mittels denen ein Signal des Sensorelementes (8) in einen Füllstand umrechenbar ist.

## Beschreibung

### Stand der Technik

Die Erfindung geht aus von einer Vorrichtung zur Bestimmung eines Füllstandes in einem Behälter nach der Gattung des Hauptanspruchs.
Es ist schon eine Vorrichtung zur Bestimmung eines Füllstandes aus der US 2004/0226367 A1 bekannt, mit einem in dem Behälter beweglich angeordneten Schwimmer, dessen jeweilige Position in dem Behälter mit dem Füllstand korreliert und mittels eines Potentiometers bestimmbar ist. Der Schwimmer ist über einen Schwimmerarm mit dem Potentiometer verbunden. Nachteilig ist, dass das Signal des Potentiometers unmittelbar an eine Füllstandsanzeige geleitet wird, da bei den wenigsten Tankgeometrien ein durchgehend linearer Zusammenhang zwischen der Position des Schwimmers und dem tatsächlichen Füllstand besteht. Der Zusammenhang zwischen der Füllhöhe und dem Füllstand ist bei vielen Tankgeometrien unstetig und/oder zumindest abschnittsweise nichtlinear. Der Schwimmerarm der Vorrichtung ist deshalb für jede Tankbehältervariante derart durch Biegen anzupassen, dass sich eine zufriedenstellende Meßgenauigkeit ergibt. Je komplizierter die Tankgeometrie ist, desto schwieriger ist es, den Schwimmerarm für eine ausreichende Meßgenauigkeit anzupassen. Die Genauigkeit des mit der Vorrichtung gemessenen Füllstands ist dadurch in vielen Fällen vergleichsweise gering.

### Vorteile der Erfindung

Die erfindungsgemäße Vorrichtung mit den kennzeichnenden Merkmalen des Hauptanspruchs hat demgegenüber den Vorteil, daß auf einfache Art und Weise eine Verbesserung dahingehend erzielt wird, dass die Meßgenauigkeit der Vorrichtung verbessert wird, indem das Signal des Sensorelementes nicht unmittelbar an das Anzeigeinstrument geleitet, sondern zunächst in einem elektronischen Steuergerät verarbeitet wird. Erfindungsgemäß sind in dem elektronischen Steuergerät Kenngrößen abgespeichert, mittels denen das Signal des Sensorelementes in einen Füllstand umrechenbar ist.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist, wenn die Kenngrößen Geometriedaten des Behälters sind, da der Füllstand auf diese Weise besonders exakt bestimmbar ist.

Weiterhin vorteilhaft ist, wenn die Kenngrößen eine durch experimentell ermittelte Stützpunkte abgebildete Kennlinie sind, die eine Korrelation zwischen dem Füllstand und dem Signal des Sensorelementes darstellt. Auf diese Weise ist die erforderliche Speicherkapazität und der Rechenaufwand in dem elektronischen Steuergerät geringer als bei der Berechnung des Füllstands mittels der Geometriedaten des Behälters.

Nach einer vorteilhaften Ausgestaltung ist vorgesehen, aus dem Stand der Technik bekannte Sensorelemente, wie beispielsweise ein Potentiometer oder einen Ultraschallsensor, zu verwenden.

### Zeichnung

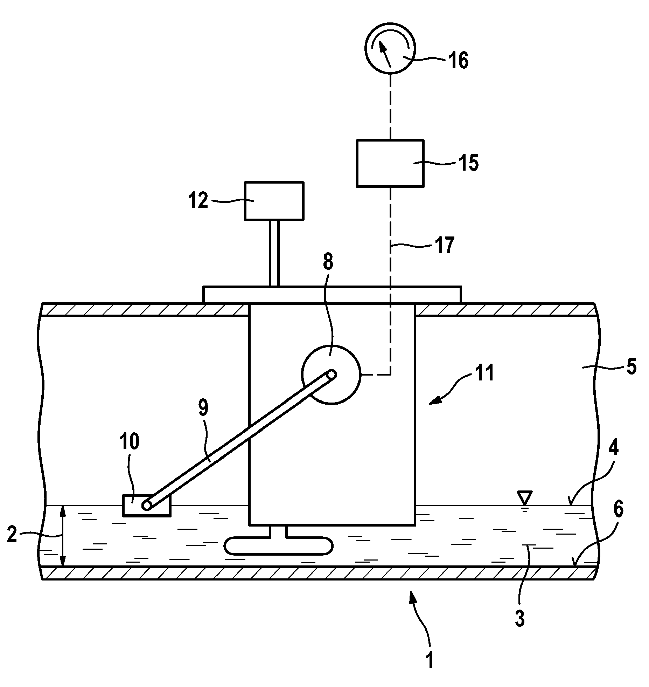

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt schematisch eine erfindungsgemäße Vorrichtung zur Bestimmung eines Füllstandes in einem Behälter.

Die erfindungsgemäße Vorrichtung ist in einem Behälter 1, beispielsweise einem Kraftstoffbehälter, angeordnet. Der Behälter 1 kann eine beliebige Form haben und beispielsweise als Satteltank oder Mehrkammertank ausgebildet sein. Der Behälter 1 ist bis zu einer variablen Füllhöhe 2 mit einer Flüssigkeit 3, beispielsweise Kraftstoff, gefüllt. In der Ebene der Füllhöhe 2 befmdet sich ein Flüssigkeitsspiegel 4 als Grenzfläche zwischen der Flüssigkeit 3 und einem darüber liegenden Leervolumen 5, das beispielsweise mit einem Gasgemisch bestehend aus Luft und verflüchtigter Flüssigkeit gefüllt ist. Die Füllhöhe 2 wird als vertikaler Abstand zwischen einem Tankboden 6 und dem Flüssigkeitsspiegel 4 definiert.

Die Vorrichtung dient dazu, einen Füllstand des Behälters 1 zu bestimmen. Das Volumen des Behälters 1 ist mit einem bestimmbaren Anteil mit Flüssigkeit 2 gefüllt. Unter dem Füllstand wird im folgenden der Quotient aus Flüssigkeitsvolumen und Gesamtvolumen des Behälters 1 verstanden.

Die erfindungsgemäße Vorrichtung weist ein beliebiges Sensorelement 8 auf. Das Sensorelement 8 detektiert die Füllhöhe 2 oder zumindest eine von der Füllhöhe 2 abhängige Meßgröße. Beispielsweise ist das Sensorelement 8 ein Potentiometer, das auf bekannte Art und Weise über einen Schwimmerarm 9 mit einem sogenannten Schwimmer 10 zusammenwirkt. Der Schwimmerarm 9 ist drehbar gelagert, so dass der Schwimmer 10 den Schwimmerarm 9 mit variierender Füllhöhe 3 drehend bewegt und das Potentiometer drehend verstellt. Der Schwimmer 10 besteht aus einem Material, das eine geringere Dichte aufweist als die Flüssigkeit 3, so dass dieser durch den Auftrieb zumindest teilweise auf der Flüssigkeitsoberfläche 4 schwimmt.

Das Sensorelement 8 kann beispielsweise auch ein Ultraschallsensor sein, der die Laufzeit eines ausgesendeten Ultraschallsignals mißt, wobei die Laufzeit des Signals ein Maß für den Füllstand ist. Ebenso können andere aus dem Stand der Technik bekannte Sensorelemente 8 verwendet werden.

Die Vorrichtung ist beispielsweise an einem Kraftstofffördermodul 11 angeordnet, das Kraftstoff aus dem Behälter 1 ansaugt und einer Brennkraftmaschine 12 zuleitet. Die Vorrichtung kann aber auch an einer Wandung des Behälters 1 vorgesehen sein.

Erfindungsgemäß ist das Sensorelement 8 mit einem elektronischen Steuergerät 15 verbunden, in dem Kenngrößen abgespeichert sind, mittels denen ein Signal des Sensorelementes 8 in einen Füllstand umrechenbar ist. Die Kenngrößen sind beispielsweise in Form eines Kennfelds abgespeichert.
Das Signal des Sensorelementes 8 wird somit nicht wie bei dem Stand der Technik unmittelbar einer Füllstandsanzeige 16 zugeleitet, sondern erst in dem elektronischen Steuergerät 15 verarbeitet. Der Schwimmerarm 9 braucht daher nicht mehr an die Geometrie des Behälters 1 angepasst zu werden, so dass für jede Behältergeometrie die gleichen Bauteile der Vorrichtung verwendbar sind. Es sind lediglich jeweils andere Behältergeometrie-spezifische Kenngrößen auf dem elektronischen Steuergerät abzuspeichern. Auf diese Weise werden die Herstellungskosten der Vorrichtung gesenkt und die Meßgenauigkeit erhöht.

Die in dem elektronischen Steuergerät 15 gespeicherten Kenngrößen sind beispielsweise die Geometrie des Behälters 1 beschreibende Daten, mittels denen das elektronische Steuergerät 15 aus dem Signal des Sensorelementes 8 das Flüssigkeitsvolumen im Behälter 1 exakt berechnen kann. Durch Bildung des Quotienten aus dem Flüssigkeitsvolumen und dem bekannten Gesamtvolumen des Behälters 1 ermittelt das elektronische Steuergerät 15 den jeweiligen Füllstand im Behälter 1. Die Geometriedaten des Behälters 1 sind beispielsweise Daten eines CAD-Systems.

Alternativ können die Kenngrößen eine durch Stützpunkte abgebildete Kennlinie sein, die eine Korrelation zwischen dem Füllstand und dem Signal des Sensorelementes 8 darstellt. Die Stützpunkte werden einmalig durch Füllstandsmessungen an der jeweiligen Tankgeometrie des Behälters 1 ermittelt und im elektronischen Steuergerät 15 gespeichert. Zwischen den Stützpunkten werden die Werte durch Interpolation berechnet.

Das elektronische Steuergerät 15 gibt den aus dem Signal des Sensorelementes 8 und den Kenngrößen berechneten Füllstand als Signal an die Füllstandsanzeige 16 weiter. Das elektronische Steuergerät 15 ist zwischen dem Sensorelement 8 und der Füllstandsanzeige 16 zwischengeschaltet und berechnet aus dem Signal des Sensorelementes 8 den korrekten Füllstand. Das Sensorelement 8, das elektronische Steuergerät 15 und die Füllstandsanzeige 16 sind mittels einer Signalleitung 17 miteinander verbunden.

Die Berechnung des Füllstands mittels der Kenngrößen kann weiter verbessert werden, indem bestimmte Fahrsituationen, beispielsweise Kurvenfahrten, oder Betriebszustände der Brennkraftmaschine 12 berücksichtigt werden.

Die erfindungsgemäße Bestimmung des Füllstandes ist deutlich exakter als beim Stand der Technik, da sie die Tankgeometrie des Behälters 1 und die damit verbundenen Unstetigkeiten und/oder die zumindest abschnittsweise auftretenden nichtlinearen Bereiche des Füllstandsverlaufes über der Füllhöhe 2 bzw. dem Signalwert des Sensorelementes 8 hinreichend berücksichtigt.

## Patentansprüche

1. Vorrichtung zur Bestimmung eines Füllstandes in einem Behälter, mit einem in dem Behälter beweglich angeordneten Schwimmer, dessen jeweilige Position mit dem Füllstand in dem Behälter korreliert und mittels eines Sensorelementes bestimmbar ist, **dadurch gekennzeichnet, dass** das Sensorelement (8) mit einem elektronischen Steuergerät (15) verbunden ist, in dem Kenngrößen abgespeichert sind, mittels denen ein Signal des Sensorelementes (8) in einen Füllstand umrechenbar ist.

2. Vorrichtung nach Anspruch 1, **dadurch gekennzeichnet, dass** die Kenngrößen die Geometrie des Behälters (1) beschreibende Daten sind.

3. Vorrichtung nach Anspruch 2, **dadurch gekennzeichnet, dass** die Kenngrößen CAD-Daten sind.

4. Vorrichtung nach Anspruch 1, **dadurch gekennzeichnet, dass** die Kenngrößen eine durch Stützpunkte abgebildete Kennlinie sind, die eine Korrelation zwischen dem Füllstand und dem Signal des Sensorelementes darstellt.

5. Vorrichtung nach Anspruch 1, **dadurch gekennzeichnet, dass** das Sensorelement (8) ein mit dem Schwimmer (10) zusammenwirkendes Potentiometer ist.

6. Vorrichtung nach Anspruch 1, **dadurch gekennzeichnet, dass** das Sensorelment (8) ein Ultraschallsensor ist.
